# EUROPEAN PATENT APPLICATION

(11) **EP 4 650 564 A1**
(43) Date of publication of application: **19.11.2025**
(21) Application number: 24175673.3
(22) Date of filing: 14.05.2024
(51) Int. Cl.: E21B 41/00, E21B 7/02

(54) **CONDITION MONITORING FOR A ROCK DRILLING ARRANGEMENT**

(71) Applicant: Sandvik Mining and Construction Oy, 33330 Tampere (FI)
(72) Inventor: HIETAKARI, Teemu, 33330 Tampere (FI); LOIMUSALO, Mikko, 33330 Tampere (FI); HONGELL, Teemu, 33330 Tampere (FI)
(74) Representative: Sandvik

(57) **Abstract**

The disclosure relates to a method and arrangements for detecting a possible service need of a rock drilling unit. In the method the inverter speed of a rock drilling unit is received at a controlling apparatus. The received inverter speed is compared to a reference value. If the comparison shows a rise in the inverter speed value, the rise may be an indication of a service need of the rock drilling machine of the rock drilling unit.

## Description

### DESCRIPTION OF BACKGROUND

The following disclosure relates to rock drilling and particularly to monitoring condition of a rock drill.

A rock drilling arrangement is a device that uses compressed air, electricity, or hydraulic power to create holes in hard materials such as rocks, concrete, or asphalt. A rock drilling arrangement typically consists of a rock drill, a drill bit and a feed system that controls the drilling depth and direction. A rock drill typically comprises of a hammer mechanism that impacts the bit and a rotating device that rotates the bit. Rock drilling arrangements are used for various applications, such as mining, quarrying, construction, demolition, or exploration. Rock drilling arrangements can vary in size, power, and configuration depending on the purpose and environment of use. Some rock drilling arrangements are handheld and portable, while others are mounted on rigs or vehicles and require external power sources.

In the following disclosure rock drilling arrangements using oil hydraulic fluid, such as oil, to cause the hammering motion, rotation of the drill bit or other drilling motion are discussed. The hydraulic fluid is provided to a rock drilling machine by a hydraulic fluid pump that is operated by an electric motor.

At present, the maintenance of rock drilling arrangements is usually done by a maintenance person following the service program of the rock drill. Additionally some of the manual inspections can done by a rock drilling arrangement operator who sees the rock drilling arrangement in the daily operation. This involves, for example, inspecting and replacing seals and other parts that wear out and need to be changed from time to time. The manual inspections include, for example, noticing a drop in percussion pressure or visible leaks of hydraulic fluid, such as percussion oil.

One drawback of the service program and manual inspections is that they reveal a potential defect only at an advanced stage. When the defect is found only after it becomes visible or the rock drill's performance has dropped considerably, the rock drilling arrangement may require an additional service break and this can stop the work while the rock drilling arrangement is being serviced. Therefore, there is a need for identifying possible defects automatically and as soon as possible so that unnecessary service breaks are avoided and the service breaks can be scheduled in a way that does not interfere with the work.

### SUMMARY

The following disclosure relates to a method and arrangements for detecting a possible service need of a rock drilling unit. In the method the inverter speed of a rock drilling unit is received at a controlling apparatus. The received inverter speed is compared to a reference value. If the comparison shows a rise in the inverter speed value, the rise may be an indication of a service need of the rock drilling machine of the rock drilling unit.

In an example embodiment an apparatus for a rock drilling unit is disclosed. The apparatus comprises at least one processor and at least one memory including computer program code, the at least one memory and the computer program code configured to, with the at least one processor, cause the apparatus at least to perform: retrieve a reference value for the rock drilling unit, receive an inverter speed value as feedback from an inverter of a rock drilling unit, compare the received inverter speed value to the retrieved reference value; and detect a possible service need in the rock drilling machine of the rock drilling unit if the comparison indicates a rise in the inverter speed. The inverter speed indicates a rise in the hydraulic fluid flow in a rock drilling machine and thus, is indicative of a possible service need. A benefit of the approach is that the rise in the inverter speed can be determined early in advance before the actual service need. This facilitates ordering necessary spare parts in advance. Furthermore, this facilitates planning of the service break so that the length of the service break can be decreased, and the rock drilling unit can be kept operational.

In an example embodiment the at least one memory and the computer program code are configured to, with the at least one processor, cause the apparatus to retrieve at least one additional reference parameter, wherein the at least one additional reference parameter is associated with the retrieved reference value, receive at least one additional parameter value, and compare the received additional parameter value to the retrieved additional reference parameter. Additional reference parameters are useful in detecting changes in the operation conditions. A change in the operating conditions may have an effect to the detected inverter speed. Thus, with additional parameters it is possible to detect if there is another reason for the change in the inverter speed and there is no need for maintenance of the rock drilling machine.

In an example embodiment the reference value is based on a benchmark measurement. It is beneficial to have a reference value indicating what the inverter speed should be in the intended conditions. A benchmark measurement is beneficial as it can determined in controlled conditions.

In an example embodiment the reference value is based on earlier received inverted speed value of the rock drilling unit. Using an earlier received inverter speed as a basis is particularly useful in environments where the conditions are stable and do not change. In those situations, it is possible to determine a possible need for maintenance reliably from the inverter speed value without any additional information as the conditions do not change.

In an example embodiment the reference value is based on the current inverter speed value of another electric rock drilling unit located in the vicinity of the rock drilling unit. It is beneficial to use an inverter speed value of another rock drilling unit that is located in the vicinity of the rock drilling unit. As the rock drilling units are close to each other the operating conditions are similar. Thus, if the inverter speed value is higher in one of the rock drilling units, it is possible that the rock drilling unit requires maintenance.

In an example embodiment the at least one memory and the computer program code are configured to, with the at least one processor, cause the apparatus to notify the user of the rock drilling unit as a response to the detected possible service need. It is beneficial to use the detected possible service need for automatic actions, such as notifying the operator of the device. Furthermore, it is possible to have also other automatic actions, such as stopping the operation in order to avoid more severe damage or ordering necessary spare parts automatically. This reduces the time the rock drilling unit needs to be out of operation.

In an example embodiment a rock drilling unit is disclosed. The rock drilling unit comprises a rock drilling machine; a hydraulic fluid pump configured to pump the hydraulic fluid operating the rock drilling machine; an electric motor configured to operate the hydraulic fluid pump; and an inverter configured to control power supplied to the electric motor. The rock drilling unit is connected to an apparatus for a rock drilling unit as described in above. It is beneficial to use an apparatus as described in above in a rock drilling unit so that the inverter speed value can be used in detecting a possible service need for the rock drilling machine of the rock drilling unit.

In an example embodiment the rock drilling unit further comprises at least one sensor for measuring at least one additional parameter. It is beneficial have at least one sensor for measuring additional parameters as additional parameters can be compared to additional reference values are. This is useful in detecting changes in operation conditions. The change in operating conditions may have an effect to the detected inverter speed. Thus, with additional parameters it is possible to detect if there is another reason for the change in the inverter speed and there is no need for maintenance of the rock drilling machine.

In an example embodiment the rock drilling unit further comprises an apparatus for a rock drilling unit. When the rock drilling unit comprises the apparatus, the apparatus has a direct connection to the rock drilling unit.

In an example embodiment the rock drilling machine is a rotation head configured to rotate a drilling tool.

In an example embodiment the rock drilling machine is a top hammer type device comprising a rotating device and a percussion mechanism.

In an example embodiment a rock drilling system is disclosed. The rock drilling system comprises a plurality of rock drilling units as described in above and at least one apparatus as described above. It is beneficial to have a plurality of rock drilling units in the system so that the inverter speed value can be retrieved from another rock drilling unit.

In an example embodiment of the rock drilling unit one apparatus is configured to control a plurality of rock drilling units. In some implementations it is beneficial if one apparatus can be used in controlling a plurality of rock drilling units. This improves communication between the rock drilling units and is more cost efficient than separate apparatuses for each rock drilling unit.

In an example embodiment each of the rock drilling units comprises the apparatus described in above. In some implementations it is beneficial to have an apparatus for each of the rock drilling units so that the rock drilling units can be controlled independently.

In an example embodiment a method for monitoring condition of a rock drilling machine is disclosed. The method comprises: retrieving a reference value for a rock drilling unit, receiving an inverter speed value as feedback from an inverter of the rock drilling unit to which the rock drilling machine is connected to, comparing the received inverter speed value to the retrieved reference value, and detecting a possible service need in the rock drilling machine if the comparison indicates a rise in the inverter speed. The inverter speed indicates a rise in the hydraulic fluid flow in a rock drilling machine and thus, is indicative of a possible service need. A benefit of the approach is that the rise in the inverter speed can be determined early and accurately in advance before the actual service need. This facilitates ordering necessary spare parts in advance. Furthermore, this facilitates planning of the service break so that the length of the service break can be decreased, and the rock drilling unit can be kept operational.

In an example embodiment the method further comprises retrieving at least one additional reference parameter, wherein the at least one additional reference parameter is associated with the retrieved reference value, receiving at least one additional parameter value and comparing the received additional parameter value to the retrieved additional reference parameter. Additional reference parameters are useful in detecting changes in the operation conditions. The change in the operating conditions may have an effect to the detected inverter speed. Thus, with additional parameters it is possible to detect if there is another reason for the change in the inverter speed and there is no need for maintenance of the rock drilling machine.

In an example embodiment the method further comprises notifying the user of the rock drilling unit as a response to the detected possible service need. It is beneficial to use the detected possible service need for automatic actions, such as notifying the operator of the device. Furthermore, it is possible to have also other actions, such as stopping the operation or ordering necessary spare parts automatically. This reduces the time the rock drilling unit needs to be out of operation.

The examples and embodiments in the above address the drawbacks of the conventional solutions by providing a solution that can detect automatically a possible service need in a rock drilling machine before it affects the performance or causes damage to the rock drilling machine. Furthermore, the provided solution can reduce the length and frequency of service breaks particularly not scheduled service breaks by facilitating ordering necessary spare parts and planning the service schedule in advance. Additionally, the solution can use additional reference parameters to account for changes in operating conditions that may affect the inverter speed and to avoid false alarms.

### BRIEF DESCRIPTION OF THE DRAWINGS

The accompanying drawings, which are included to provide a further understanding of the condition monitoring for a rock drilling arrangement for a rock drilling arrangement and constitute a part of this specification, illustrate embodiments and together with the description help to explain the principles of the condition monitoring for a rock drilling arrangement for a rock drilling arrangement. In the drawings:
**Fig. 1** is a block diagram of an apparatus for a rock drilling unit,
**Fig. 2** is a block diagram of an example of a rock drilling unit,
**Fig. 3** is a block diagram of an example of a rock drilling system,
**Fig. 4** is a flow chart of an example of a method for a condition monitoring for a rock drilling arrangement, and
**Fig. 5** is a flow chart of an example of a method for condition monitoring for a rock drilling arrangement.

### DETAILED DESCRIPTION

Reference will now be made in detail to the embodiments, examples of which are illustrated in the accompanying drawings.

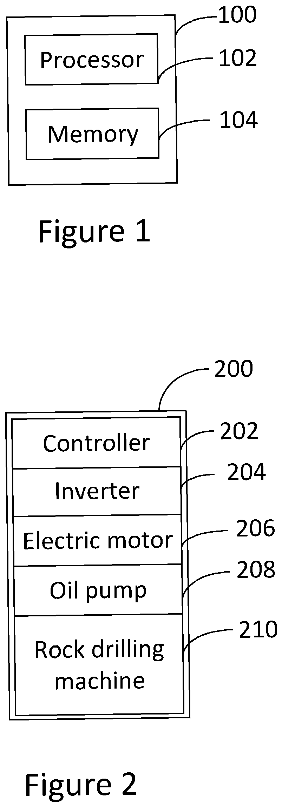

In figure 1 a block diagram of an apparatus for a rock drilling unit is disclosed. The apparatus may be a small computing unit, controller or similar apparatus that is capable of executing computer program code. In the example of figure 1 the apparatus is a controller that is configured to control a rock drilling unit. The controller 100 comprises at least one processor 102 and at least one memory 104. The at least one memory 104, which maybe suitable volatile or nonvolatile memory, comprises a computer program code, which when executed, causes the controller to perform a method for condition monitoring for a rock drilling arrangement as described in below. The controller is connected to a rock drilling unit. The connection maybe wired or wireless and it is possible to connect several rock drilling units to the controller. The connection to the rock drilling unit and particularly to the inverter of the rock drilling unit may be arranged using common connection so that the interface to the inverter is shared with other controlled features or it may be a specific connection to the inverter. It is possible that the controller 100 and the functionality described in below is integrated with the controller or computer sending instructions to the rock drilling unit with regard drilling. Thus, the controller may be configured to transmit additional information, such as drilling instructions and to receive additional information, such as temperature or similar from the drilling unit. In the present arrangement for condition monitoring the controller receives the inverter speed from an inverter of the rock drilling unit. In some embodiments the additionally received information maybe used in determining the condition of the rock drilling machine of the rock drilling unit. However, in many implementations the inverter speed alone is sufficient for the determination.

In figure 2 a block diagram of an example of a rock drilling unit is disclosed. In the example of the figure the rock drilling unit 200 comprises a controller 202, an inverter 204, an electric motor 206, an oil pump 208 and a rock drilling machine 210. In the example of figure 2 the hydraulic fluid is oil, however, other suitable hydraulic fluids may be used.

In the example of figure 2 the controller 202 is similar to the example of figure 1 or at least it is capable to cause performing of the same method. The method will be explained in more detail in below. In the example of figure 2 the controller 202 is located at the rock drilling unit 200. The controller 202 is connected to the inverter 204 in a manner that enable receiving the inverter speed from the inverter 204. The inverter is configured to control the electric motor 206 by providing an alternating current to the electric motor 206, which operates the oil pump 208. The oil pump 208 is used to provide an oil flow. The oil flow can be used to generate a pressure according to work settings so that the rock drilling machine 210 can be operated in the current environment. The inverter speed is raised until desired level of pressure is achieved. When the conditions are stable, the inverter speed needed to achieve a certain pressure is substantially the same. In the context of the present disclosure the rock drilling machine 210 is a part of the rock drilling unit that is operated by oil pressure and comprises conventional means for breaking rock. These may include, for example, drilling bit and hammer mechanism.

The actual amount of the percussion oil flow can be derived from the inverted speed, which the inverter 204 provides to the controller 202 as a feedback information. For example, in an example of a rock drilling unit an electric motor rotation speed 1900 rpm will lead to 45 l/min oil flow (68 cSt oil at 50 C) meaning 140 bar percussion pressure with a RD212 rock drill, when pump size is 24 cc. The permanent magnet electric motor is very rigid and accurate as well as the fixed displacement piston pump operating on the floating cup principle. Both of them have very long lifetime prediction. The examples mentioned above may vary based on the oil type, temperature and rock drilling machine model.

Percussion pressure and the hydraulic oil temperature are commonly measured with sensors in the rock drilling unit. If the inverter speed is rising from a reference value while the conditions otherwise stay the same, the operator may be notified and asked to check the condition of the rock drilling machine. If the rock drilling machine is not worn, and the working conditions have not changed, the rise in the inverter speed may be indicating some other fault that can be detected from the increased oil flow. For example, a drain flow coming from the oil pump 208 may cause an increase in the oil flow. This can be quickly checked by draining oil to a bucket during the percussion. If the leakage is not significant, the reason is typically in the rock drilling machine. However, if the leakage is significant, the reason may be in the oil pump 208.

In the above sensors for measuring temperature of the hydraulic oil and percussion pressure have been discussed. The rock drilling unit may comprise additional sensors for measuring additional measures, such as environment temperature. The additionally measured values may have an effect in working conditions and thus, when the inverter speed is compared with a reference value, the possibly changes environmental conditions may be taken into account. This provides a possibility to exclude situations, wherein the inverter speed has risen because of the change in the working conditions.

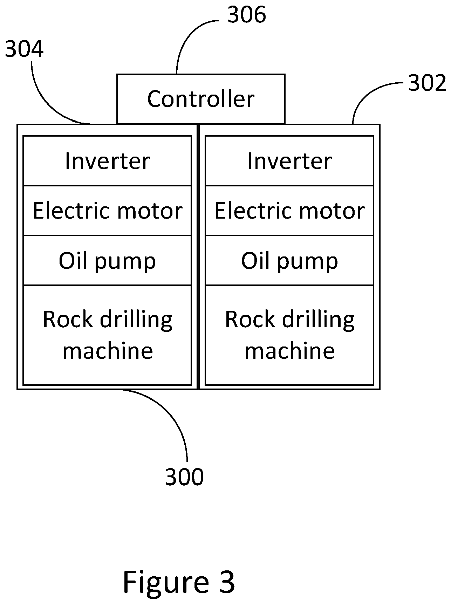

In figure 3 a block diagram of an example of a rock drilling system is disclosed. In the figure a rock drilling system comprising two rock drilling units 302, 304 is disclosed. The rock drilling system comprises one controller 306 that is configured to control both of the rock drilling units. The example of figure 3 comprises only two rock drilling units, however, the number of rock drilling units may be higher than two. In case of more than two rock drilling units, it is possible that some of the rock drilling units have a shared controller, and some rock drilling units comprise their own controller so that the rock drilling unit is similar to the example of figure 2.

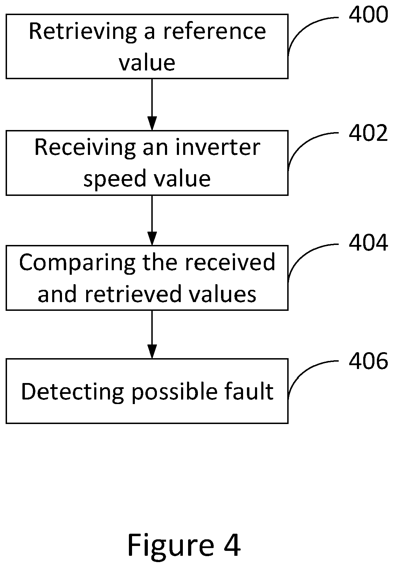

In figure 4 a flow chart of an example of a method for a condition monitoring is disclosed. In the figure the example of the method is performed, for example, by a controller similar to the controller of figure 1 in a rock drilling unit similar to the example of figure 2. The method is initiated by retrieving a reference value for the inverter speed, step 400. The reference value may be retrieved from a local memory or from a database, cloud service or similar. Then, the controller receives the inverter speed value from the inverter of the rock drilling unit, step 402. The received and retrieved values are then compared, step 404. If the comparison result shows a difference in the comparison and there is no change in the drilling conditions, the comparison result indicates a possibly worn rock drilling machine.

The retrieved reference value may be determined using different mechanisms. In the following some examples for determining the reference value are discussed. For example, when the rock drilling unit is manufactured or serviced, one or more benchmark reference values may be determined. It is possible to determine one or more benchmark values, for example, so that different working conditions can be taken into account. In some implementations the benchmark values are based on measurements using a test bench, however, it is also possible to determine benchmark values using simulation or other computational methods. A second possibility to is to store the values that are received during ordinary operation of the rock drilling unit for later use and compare the received inverter speed to the inverter speed of the previous or earlier date. The earlier date may be, for example, the first date when the rock drilling unit was used at that working site. A third option is to use an inverter value from another rock drilling unit that is located in the vicinity of the rock drilling unit. If the rock drilling units are operating in the same working conditions, the inverter speeds should be substantially the same, provided that the rock drilling units are in substantially same condition. The received values may also be stored for a later use so that it can be seen if the values change over time. This provides a possibility to see small accumulated wearing, and even to forecast how the wearing evolves over time.

The inverter speed value is received as feedback during the normal working. The received feedback may be a single time value received at a predetermined interval. Optionally the inverter speed value maybe a moving average or similar so that individual measurement deviations can be taken into account. The received and retrieved values are then compared, step 402, and if the comparison result shows difference in the value, it maybe detected, step 404, the rock drilling machine is worn and may need a service. The simple comparison provides a reliable status report when the operating conditions are the same for the measured and the retrieved value. For example, when the reference value is retrieved from a neighboring rock drilling unit, it may be assumed that the operating conditions are the same.

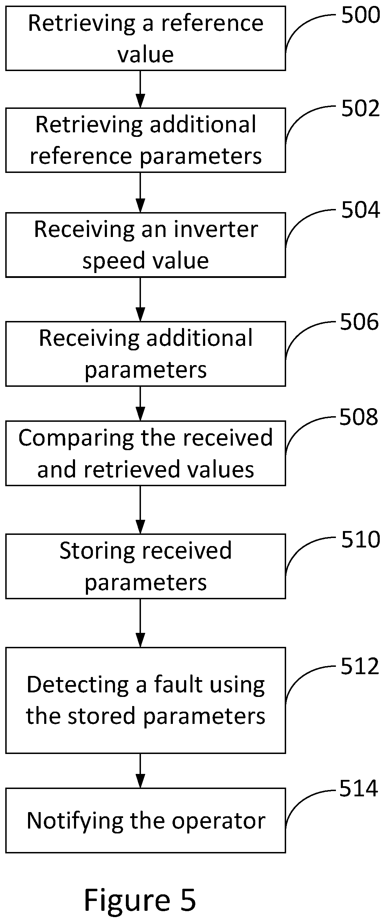

In figure 5 a flow chart of an example of a method for a condition monitoring for a rock drilling arrangement is disclosed. Figure 5 comprises optional steps that are not always necessary for the method. The method is initiated by receiving a reference value, step 500. The retrieving step is similar to the retrieving step of example of figure 4. Thus, similar principles may be applied in determining the reference value. Then, optionally, the method proceeds to retrieving additional reference parameters. These parameters may be any parameters that can be measured at the rock drilling unit. For example, percussion oil temperature, pressure, environmental temperature and similar. Additional reference parameters may be determined using the same principles as with the inverter speed reference value. Thus, reference values may be determined using different mechanisms.

When all reference parameters have been retrieved, the method proceeds to receiving an inverter speed value, step 504. After receiving the inverter speed value, values for additional parameters are received, step 506. Receiving of additional parameters is optional, however, steps of retrieving additional reference parameters and receiving values for additional parameters are intended to be performed as a pair. If one is not performed, the second does not need to be performed. Receiving values for additional parameters requires that the rock drilling unit comprises appropriate measurement tools for measuring the parameters.

Then all received and retrieved values are compared respectively. Now, if the comparison shows an increase in the inverter speed value it is possible to compare additional parameters. If this comparison indicates change in working conditions, it is possible that the change in the working conditions cause the rise in inverter speed. The comparison of additional parameters helps the operator of the rock drilling unit to determine if the reason for the rise in inverter speed is in the rock drilling machine or in the conditions.

Optionally, in step 510, the received parameters are stored. Even if the method is sequential in the figure, storing parameters may be performed before or after comparing the received and retrieved values. The stored parameters may optionally be used in detecting a fault, step 512. It is possible to use several earlier received values in the determination process. Using several received values show a trend of the value so that it is easy to see if there is a change of value over certain period of time. If the additional parameters have been used, it is possible to show them accordingly to the operator of the rock drilling unit. Finally, if a fault is detected, the operator is notified, step 514. The notification maybe a simple message or similar. In more advanced implementations the notification may comprise a proposal for ordering needed spare parts so that they are automatically ordered. The automatic ordering or any other automatic steps may be subjected to an approval by the operator.

The above-mentioned method may be implemented as computer software which is executed in a computing device able to communicate an inverter of a rock drilling unit. When the software is executed in a computing device it is configured to cause performing the method described above. The software is embodied on a computer readable medium so that it can be provided to the computing device, such as the controller of figure 1 or other similar apparatus for controlling a rock drilling unit.

As stated above, the components of the exemplary implementations can include computer readable medium or memories for holding instructions programmed according to the teachings of the present embodiments and for holding data structures, tables, records, and/or other data described herein. Computer readable medium can include any suitable medium that participates in providing instructions to a processor for execution. Common forms of computer-readable media can include, for example, a floppy disk, hard disk, magnetic tape, any other suitable magnetic medium, a CD-ROM, DVD, Blu-ray Disc, any other suitable optical medium, a RAM, a PROM, an EPROM, a FLASH-EPROM, any other suitable memory chip or cartridge, a carrier wave or any other suitable medium from which a computer can read.

It is obvious to a person skilled in the art that with the advancement of technology, the basic idea of the condition monitoring for a rock drilling arrangement for a rock drilling arrangement may be implemented in various ways. The condition monitoring for a rock drilling arrangement for a rock drilling and its implementations are thus not limited to the examples described above; instead they may vary within the scope of the claims.

## Claims

1. An apparatus for a rock drilling unit comprising:
at least one processor (102) and at least one memory (104) including computer program code, the at least one memory and the computer program code configured to, with the at least one processor, cause the apparatus at least to perform:
retrieve a reference value for the rock drilling unit;
receive an inverter speed value as feedback from an inverter of a rock drilling unit;
compare the received inverter speed value to the retrieved reference value; and
detect a possible service need in the rock drilling machine of the rock drilling unit if the comparison indicates a rise in the inverter speed.

2. An apparatus according to claim 1, wherein the at least one memory (104) and the computer program code are configured to, with the at least one processor (102), cause the apparatus to:
retrieve at least one additional reference parameter, wherein the at least one additional reference parameter is associated with the retrieved reference value;
receive at least one additional parameter value; and
compare the received additional parameter value to the retrieved additional reference parameter.

3. An apparatus according to claim 1 or 2, wherein the reference value is based on a benchmark measurement.

4. An apparatus according to claim 1 or 2, wherein the reference value is based on earlier received inverted speed value of the rock drilling unit.

5. An apparatus according to claim 1 or 2, wherein the reference value is based on the current inverter speed value of another electric rock drilling unit located in the vicinity of the rock drilling unit.

6. An apparatus according to any of claims 1 - 5, wherein the at least one memory (104) and the computer program code are configured to, with the at least one processor (102), cause the apparatus to notify the user of the rock drilling unit as a response to the detected possible service need.

7. A rock drilling unit comprising:
a rock drilling machine (210);
a hydraulic fluid pump (208) configured to pump the hydraulic fluid operating the rock drilling machine;
an electric motor (206) configured to operate the hydraulic fluid pump; and
an inverter (204) configured to control power supplied to the electric motor;
wherein the rock drilling unit is connected to an apparatus (202) according to any of claims 1 - 6.

8. A rock drilling unit according to claim 7, wherein the rock drilling unit further comprises:
at least one sensor for measuring at least one additional parameter.

9. A rock drilling unit according to claim 7 or 8, wherein the rock drilling unit (200) further comprises an apparatus (202) according to any of claims 1 - 6.

10. A rock drilling system comprising:
a plurality of rock drilling units (302, 304) according to claims 7 or 8; and
at least one apparatus (306) according to any of claims 1 - 6.

11. A rock drilling system according to claim 10, wherein one apparatus (306) is configured to control a plurality of rock drilling units.

12. A rock drilling system according to claim 10, wherein each of the rock drilling units comprises an apparatus according to any of claims 1 - 6.

13. A method for monitoring condition of a rock drilling machine comprising:
retrieving (400, 500) a reference value for a rock drilling unit;
receiving (402, 504) an inverter speed value as feedback from an inverter of the rock drilling unit to which the rock drilling machine is connected to;
comparing (404, 508) the received inverter speed value to the retrieved reference value; and
detecting (406, 512) a possible service need in the rock drilling machine if the comparison indicates a rise in the inverter speed.

14. A method according to claim 13, wherein the method further comprises:
retrieving (502) at least one additional reference parameter, wherein the at least one additional reference parameter is associated with the retrieved reference value;
receiving (506) at least one additional parameter value; and
comparing (508) the received additional parameter value to the retrieved additional reference parameter.

15. A method according to claim 13 or 14, wherein the method further comprises notifying (514) the user of the rock drilling unit as a response to the detected possible service need.
